# EUROPEAN PATENT APPLICATION

(11) **EP 2 023 426 A1**
(43) Date of publication of application: **11.02.2009**
(21) Application number: 07720642.3
(22) Date of filing: 02.04.2007
(51) Int. Cl.: H01M 4/58, H01M 4/04, H01M 10/40

(54) **A POSITIVE ELECTRODE MATERIAL FOR SECONDARY BATTERY AND THE PREPARATION METHOD OF THE SAME**

(30) Priority: 12.05.2006 CN 200610081962
(71) Applicant: Sobright Technology (Jiaxing) Co., Ltd., Jingbian Yuan Xi Qu Haining Zhejiang 314419 (CN)
(72) Inventor: SHI, Jay Jie, Haining, Zhejiang 314419 (CN)
(74) Representative: Gleiss & Grosse
(86) International application number: PCT/CN2007/001068
(87) International publication number: WO 2007/131411

(57) **Abstract**

The present invention relates to a positive electrode material for secondary battery and the preparation method thereof, wherein the said positive electrode material comprises LiₓNi_{1-y-z}Co_{y}Me_{z}O_{2±n} as the main component, 0.9≤x≤1.1, 0<y≤0.3, 0≤z≤0.1, 0≤n≤0.1 and Me is selected at least one or two elements from the group consisting of Mg, Zn, Mn, Co, A1 and Ca in the formula, and LiᵥNi₁₋ₐMe'ₐO_{2±m} or LiₓNi_{1-y}Me"_{y}PO₄ existed on the polycrystalline surface of the main component and/or among the crystal phase of the main component. The proportion of peak intensity ratio of (003) to (104) of the positive electrode material in the polycrystalline X-ray diffraction spectrum is 2.0≤I₍₀₀₃₎/I₍₁₀₄₎≤3.0. The secondary battery comprising said positive electrode material is liquid, solid or polymer lithium secondary battery or lithium ion battery.

## Description

### Technical Field

This invention relates to a positive electrode material for secondary battery, and more particularly, it relates to a positive electrode material for secondary lithium battery and the preparation method thereof, which belongs to the field of secondary lithium battery.

### Background of the Invention

At present, the positive electrode materials for secondary battery are mainly the lithium cobalt dioxide material. The disadvantage of this material is that within the battery-using voltage range its discharge capacity is under 150mAh/g and it has a high price. For seeking low-cost positive electrode materials with a high discharge capacity, many projects specialize in developing materials containing lithium nickel dioxide as the main component and with a high nickel content, because its discharge capacity can be up to 200mAh/g.

Material containing Lithium nickel dioxide as the main component has a two-dimensional layered structure similar to the lithium cobalt dioxide material. However, the structural stability of lithium nickel dioxide material is poor. The reason is that the nickel atoms can easily get into the location of the lithium atoms to cause the mixture of nickel-lithium atoms and structural defect, to decrease structural regularity of the material, consequently to decrease structural stability of the material and lead to lower electrochemical activity and cycle performance [M. Guilmard, L. Croguennec, C. Delmas; Journal of The Electrochemical Society, 150, A1287 (2003)].

X-ray diffraction analysis (XRD) is a widely used structural analysis method. According to the result of X-ray diffraction analysis, the structure regularity of crystal material can be measured, and the structural stability information can be obtained. The degree of the nickel-lithium atomic mixing in the structure of lithium nickel dioxide material can be characterized by the intensity ratio I(003)/I(104) of the diffraction peak (003) and (104) in XRD spectrum. If the value of I(003)/I(104)is high, it means a low degree of nickel-lithium atoms mixing in the structure of lithium nickel dioxide material, and also means a high electrochemical activity, i.e. the high discharge capacity and the well cycle performance [P. Y. Liao, J. G. Duh, S. R. Sheen; Journal of The Electrochemical Society, 152, A1695 (2005); T. Ohzuku, A. Ueda, M. Nagayama; Journal of The Electrochemical Society, 140, 1862 (1993)].

Many materials containing lithium nickel dioxide as the main component and with a high nickel content were reported recently. In order to promote their discharge capacity, cycle performance and safety performance, the usual means are doping or surface modification. These means can improve the value of I(003)/I(104) at different degree, however all the values of I(003)/I(104) of the materials reported are not more than 2.0.

For example, Fuji Chemical Industry Co. has disclosed a series of materials containing lithium nickel dioxide as the main component in its patent. The values of I(003)/I(104) of these materials are 1.2∼1.7[US Patent # 6045771; US Patent # 6395250 B2]. Albrecht et al. have reported a lithium nickel cobalt oxides material doped by aluminum or Magnesium, Li₁₋ₓ(Ni_{1-y-z}Co_{y}Me_{z})O₂ (M=A1, Mg).Its value of I(003)/I(104) is less than 2.0 [S. Albrecht et al; Journal of Power Sources, 119-121, 178 (2003)]. Kureha Chemical Industry Co. has disclosed a doped lithium nickel cobalt oxides material coated by Co on the surface, and its value of I(003)/I(104) is about 1.5 [US Patent Application, US 2002/0192552Al]. Cho et al. have reported LiNi_{0.8}Co_{0.1}Mn_{0.1}O₂ with aluminum phosphate on the surface, and its value of I(003)/I(104) is also less than 2.0 [J. Cho et al, Journal of The Electrochemical Society, 151, A1707 (2004)]. Although LiNi_{0.8}Co_{0.2}O₂ covered with SiO₂ coating on the surface has a higher value, however it is still not more than 2.0 [H. Omanda et al, Journal of The Electrochemical Society, 151, A922 (2004)].

### Summary of the Invention

The purpose of the present invention is to provide a positive electrode material for secondary lithium battery and preparation method thereof.

Lithium nickel dioxide material is a material with a layered structure, belonging to R3m space groups; the nickel atoms and the lithium atoms are located at the 3(a) and 3(b) position of this structure, respectively. As the radius of bivalent nickel ion (0.70 Å) is very close to that of lithium ion (0.74 Å), nickel and lithium ions can be easily mixed. The bivalent nickel ions come into the location of lithium ions at 3(b) position, which will prevent the motion of lithium ion and then decrease material electrochemical activity. Moreover, bivalent nickel ions will further lead to precipitation of oxygen atoms from the structure, and these oxygen atoms will initiate exothermal decomposition of the electrolyte and decrease the safety performance of battery. In the positive electrode material with lithium nickel dioxide as main component, bivalent nickel ions could be easily produced on the polycrystalline surface of the material and among the crystal phase of the material. Therefore, it is very important to improve the structural regularity of the lithium nickel dioxide material and to decrease the content of the bivalent nickel ion in the structure for promoting discharge capacity, cycle performance and safety performance of the material.

Based on the above comprehension and analysis, the present invention provides a metallic oxide positive electrode material for secondary lithium battery, which is composed of the main component and the component which is contained on the polycrystalline surface of the main component and/or among the crystal phase of the main component. This component helps to improve the structural regularity of lithium nickel dioxide material and decrease the content of the bivalent nickel ion in the structure, thus improves discharge capacity, cycle performance and safety performance.

A kind of positive electrode material whose main component is represented by the general formula of LiₓNi_{1-y-z}Co_{y}Me_{z}O_{2±n}; wherein, 0.9≤x≤1.1, 0<y≤0.3, 0≤z≤0.1 and 0≤n≤0.1; Me is any one or two selected from the group consisting of Mg, Zn, Mn, Co, A1 and Ca. The bivalent nickel ions on the polycrystalline surface of the main component and among the crystal phase of the main component transform into trivalent nickel ions through the reaction with other metallic oxides, and form a transition metal oxide component with higher stability and with certain conductive property of lithium ions. The transition metal oxide component which is contained on the polycrystalline surface of the main component and/or among the crystal phase of the main component is represented by the general formula of LiᵥNi₁₋ₐMe'ₐO_{2±m}; wherein, Me' is any one or two selected from the group consisting of Co, Mn, W, Mo, Cr, Ti, Fe and Mg, 0.5≤v≤1.5, 0.5≤a≤1.0, 0≤m≤0.1; and the molar ratio of the transition metal oxide component which is contained on the polycrystalline surface of the main component and/or among the crystal phase of the main component to the main component ranges from 0.01 to 0.5, i.e. 0.01 ≤[LiᵥNi₁₋ₐMe'ₐO_{2±m}]/[LiₓNi_{1-y-z}Co_{y}Me_{z}O_{2±n}]≤0.5; the best molar ratio is 0.03∼0.1, i.e. 0.03 ≤ [LiᵥNi₁₋ₐMe'ₐO_{2±m}]/ (LiₓNi_{1-y-z}Co_{y}Me_{z}O_{2±n}]≤0.1. In view of the excellent electrochemical activity and thermal stability of the oxides of Co and Mn, it's better to choose Co and Mn as Me' in the LiᵥNi₁₋ₐMe'ₐO₂. The value of v is at the range of 0.5 to 1.5, preferably 1.0 to 1.05; the value of a is at the range of 0.5 to 1.0, preferably 0.5 to 1.0. The value of m is 0 to 0.1.

The present invention provides another kind of positive electrode material, whose main component is represented by the general formula of LiₓNi_{1-y-z}Co_{y}Me_{z}O_{2±n}; wherein, 0.9≤x≤ 1.1, 0<y≤0.3, 0≤z≤0.1, 0≤n≤0.1, Me is any one or two selected from the group consisting of Mg, Zn, Mn, Co, A1 and Ca. The Ni²⁺ ions on the polycrystalline surface of the main component and/or among the crystal phase of the main component transform into a stable component represented by the general formula of LiₓNi_{1-y}Me"_{y}PO₄ through reaction with phosphate radical. The reaction stabilizes Ni²⁺ ions and prevents further formation of Ni²⁺ ions on the polycrystalline surface of the main component and/or among the crystal phase of the main component. In the formula, Me" is Co or Fe; the value of x is at the range of 1.0 to 1.5, preferably 1.0 to 1.05; the value of y is at the range of 0 to 0.5, preferably 0 to 0.15. The molar ratio of the component which is contained on the polycrystalline surface of the main component and/or among the crystal phase of the main component to the main component is 0.001∼0.05, i.e. 0.001 ≤[LiₓNi_{1-y}Me"_{y}PO₄]/ [LiₓNi_{1-y-z}Co_{y}Me_{z}O_{2±n}]≤0.05; the best is 0.001∼0.01, i.e. 0.001≤[LiₓNi_{1-y}Me"_{y}PO₄]/ [LiₓNi_{1-y-z}Co_{y}Me_{z}O_{2±n}]≤0.01.

In the spectrum of the positive electrode material for secondary battery provided in the present invention, the intensity ratio I₍₀₀₃₎/I₍₁₀₄₎ of (003) to (104) diffraction peak ranges from 2.0 to 3.0.

The present invention also provides a method to prepare the positive electrode material for secondary battery, including two steps: the first step is to prepare the main component of LiₓNi_{1-y-z}Co_{y}Me_{z}O_{2±n}; the second step is to form the component of LiᵥNi₁₋ₐMe'ₐO_{2±m} or LiₓNi_{1-y}Me"_{y}PO₄ on the polycrystalline surface of the main component and/or among the crystal phase of the main component, and then the positive electrode material for secondary battery is obtained. The steps are described as follows:

The first step: preparing the main component LiₓNi_{1-y-z}Co_{y}Me_{z}O_{2±n} including the following detailed steps:
(1) The starting material is lithium, nickel, cobalt and the metal Me hydroxide. Their mole fraction is [Ni]=1-y-z, [Co]=y, [Me]=z, respectively; and the molar ratio of the lithium ions to metal ions (Ni+Co+Me) is 0.9≤[Li]/[Ni+Co+Me]≤1.2;
(2) The raw materials mixed in the step a. are put into a furnace and sintered in air atmosphere through 2 stages. In the first stage, the system temperature is raised to 400∼500°C with a heating rate of 1 ∼ 10 °C /min, and maintained for 2∼8 hours; preferably, the heating rate is 3∼5°C/min, the temperature maintains at 450∼470°C, and the temperature maintains for 3-5 hours. After that, the system temperature is raised to 700∼800°C a the heating rate of 1∼10°C /min, then maintained for 5-20 hours; preferably, the heating rate is 1∼3°C /min, the temperature maintains at 700∼750°C, and the temperature maintains for 8-12 hours. The system is cooled after the end, and the material obtained by sintering is crushed.

I₍₀₀₃₎/I₍₁₀₄₎ of the obtained positive electrode material with doped lithium nickel dioxide material as main component ranges from 1.2 to 1.9. This material has a high discharge capacity, however its coulomb discharge rate is comparatively low which influences cycle life of the battery.

The purpose of the second step of the preparation process is to further improve the structural regularity of the main component prepared in the first step, and to decrease the content of the bivalent nickel ions on the polycrystalline surface of the main component and/or among the crystal phase of the main component, and to obtain positive electrode material with a higher I₍₀₀₃₎/I₍₁₀₄₎ ratio. There are two methods in the second step:
Method one: The material of LiₓNi_{1-y-z}Co_{y}Me_{z}O_{2,} and the aqueous solution of Me'(NO₃)₂ and LiNO₃ are mixed according to the ratio. The molar ratio of the metal Me' ions to the main component, i.e. [Me']/[LiₓNi_{1-y-z}Co_{y}Me_{z}O₂] is 0.01-0.5, the best is 0.03∼0.1. In the said aqueous solution, the molar ratio of the lithium ions to the metal Me' ions is 0.5∼1.5, the best is 1.0. After drying and dewatering the suspension, the solid powder is obtained, which is put into a high-temperature furnace and sintered in air atmosphere; the sintering temperature is 500∼800°C, the best is 700∼750°C; The sintering time is 1∼8 hours, the best is 2-4 hours. After sintering, it is naturally cooled to room temperature. The I₍₀₀₃₎/I₍₁₀₄₎ ratio of this obtained material is 2.0∼3.0.
Method two: The main component of LiₓNi_{1-y-z}Co_{y}Me_{z}O₂, and the aqueous solution of Me"(NO₃)₂ and NH₄H₂PO₄ are mixed according to the ratio. The molar ratio of the PO₄³⁻ ions to the main component is 0.001∼0.05, the best is 0.001∼0.01. After drying and dewatering the suspension, the solid powder is obtained, which is put into a high-temperature furnace and sintered in air atmosphere; the sintering temperature is 500∼800°C, the best is 700∼750°C; The sintering time is 1∼8 hours, the best is 2-4 hours. After sintering, it is naturally cooled to room temperature. The I₍₀₀₃₎/I₍₁₀₄₎ ratio of this obtained material is 2.0∼3.0.

In a word, the present invention provides two kinds of positive electrode material for secondary battery and preparation method thereof. The I₍₀₀₃₎/I₍₁₀₄₎ ratio of the two kinds of positive electrode materials is 2-3. The secondary battery composed of these two kinds of positive electrode material is liquid, solid or polymer secondary lithium battery or lithium ion battery.

### Brief Description of the Drawings

Figure 1 is the XRD spectrum of the positive electrode material of transition metal oxide provided by the example 1.
Figure 2 is the cycle curve of the positive electrode material of transition metal oxide provided by the example 1.
Figure 3 is the discharge curve of the positive electrode material of transition metal oxide provided by the example 1.
Figure 4 is the XRD spectrum of the positive electrode material provided by the example 2.
Figure 5 is the cycle curve of the positive electrode material provided by the example 2.
Figure 6 is the XRD spectrum of the positive electrode material provided by the example 3.

### Detailed description of the invention

The following examples are used to further explain this invention, but not to restrict the scope of this invention.

### Example 1

11.36 parts of mono-aquo LiOH, 1.99 parts of LiNO₃, 2.145 parts of Co(OH)₂ and 25 parts of spherical Ni(OH)₂ were mixed, and then this mixture was put into a high-temperature furnace and sintered in air atmosphere. The heating steps of sintering include: raising the temperature from room temperature to 400°C with a heating rate of 5°C/min, raising the temperature from 400°C to 465°C with a heating rate of 1°C/min, and maintaining at 465°C for 4 hours, and then raising the temperature from 465°C to 750°C with a heating rate of 1°C /min, maintaining at 750°C for 10 hours. The sintered material was naturally cooled to room temperature. The obtained Li_{1.04}Ni_{0.92}Co_{0.08}O₂ was crushed into powder with an average particle size of 10∼15 µm.

100 parts of Li_{1.04}Ni_{0.92}Co_{0.08}O₂ powder were added into the aqueous solution containing 21 parts of Co(NO₃)₂·6H₂O, 0.26 parts of Mg(NO₃)₂·6H₂O and 5 parts of LiNO₃, stirred for 30 min, and then the mixture was evaporated at 120°C to remove the water. The drying powder was put into a high-temperature furnace and sintered in air atmosphere. The heating steps of sintering included: raising the temperature from room temperature to 600°C with a heating rate of 5°C/min, raising the temperature from 600°C to 725°C with a heating rate of 1°C /min, and maintaining at 725°C for 2 hours, and then cooling from 725°C to 550°C with a cooling rate of 1°C/min, then naturally cooled to room temperature. The products S-1 was crushed into powder with an average particle size of 10∼15 µm.

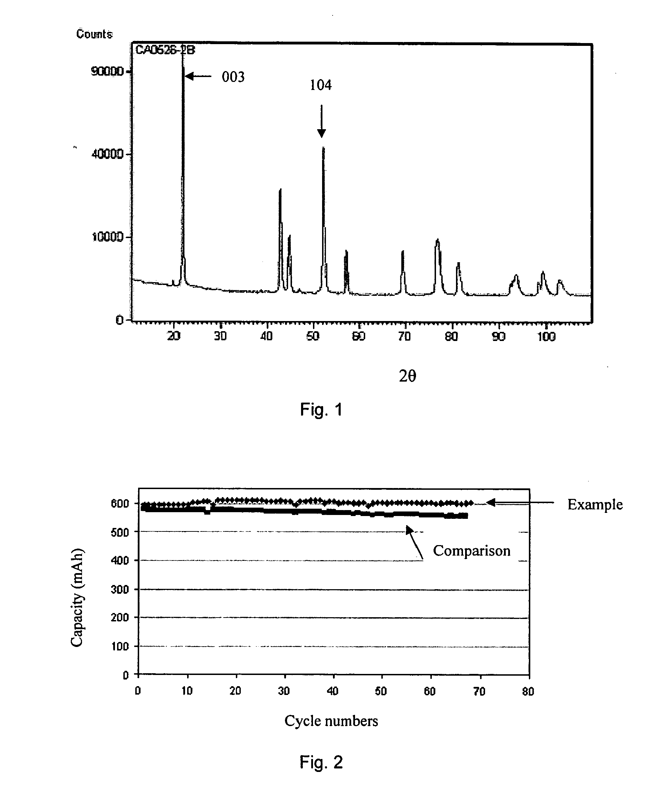

The X-ray powder diffraction measurement was performed using Co Kα ray. The I(003)/I(104) value of the material is 2.90 (Figure 1).

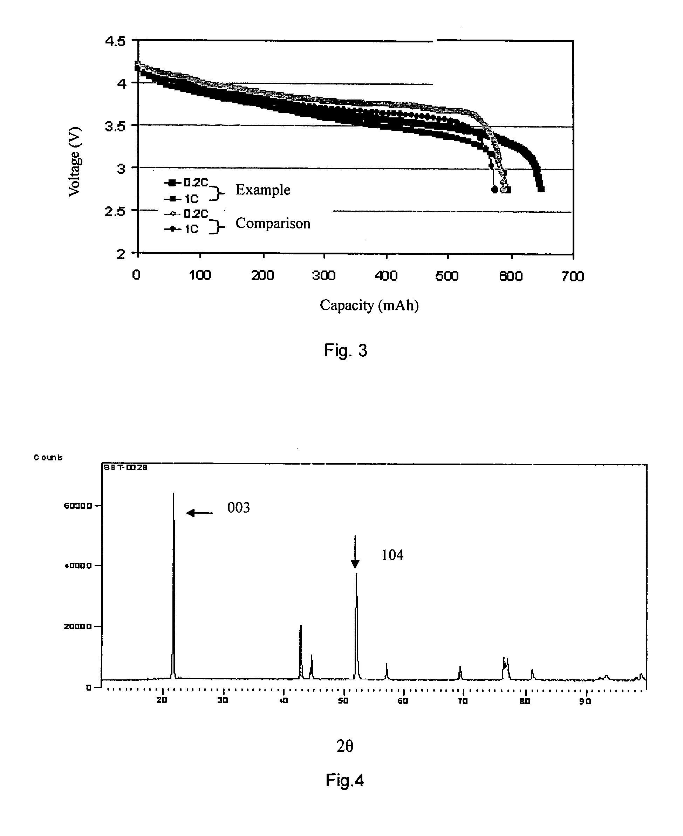

The testing battery is angle battery, whose length×width×height= 48×30×4.2mm. 93.4 parts of S-1, 3 parts of acetylene black (Super P) and 3.6 parts of PVDF were mixed with 45 parts of NMP to prepare slurry, which was coated on an aluminium foil with thickness of 15µm. This produced a positive electrode of battery whose diaphragm was polyethylene with a thickness of 20µm. The electrolyte was EC/DMC/EMC-LiPF₆ 1M, and the negative electrode was artificial graphite (MCMB). The battery was designed with a capacity of 550mAh. The charge and discharge performances of the battery were set at a current of 550mA, and when the voltage charge reached to 4.2V, a constant voltage charge at 4.2V was employed until terminate current 55mA was reached. The discharging terminate voltage was 2.75V. The discharge curve and the cycle curve are shown in Figure 2 and 3.

The comparison battery was prepared in the same procedures and using the same electrode formula. Its positive electrode material is lithium cobalt dioxide (CITIC GUOAN MGL). The testing conditions and procedure were also the same as the above. The discharge curve and the cycle curve are shown in Figure 2 and 3. The results show that the discharge capacity of the example battery 0.2C prepared by S-1 material is 10% higher than that of the comparison battery. And the capacity of the example battery after 100 cycles has no loss comparing with the capacity of the initial cycle, while the capacity of the comparison battery has lost 4%.

### Example 2

41.0 parts of mono-aquo LiOH, 7.2 parts of LiNO₃, 7.7 parts of Co(OH)₂, 4.5 parts of MnO₂ and 85.4 parts of spherical Ni(OH)₂ were mixed, and then this mixture was put into a high-temperature furnace and sintered in air atmosphere. The heating steps of sintering included: raising the temperature from room temperature to 400°C with a heating rate of 5°C /min, raising the temperature from 400°C to 465°C with a heating rate of 1°C/min, and maintaining at 465°C for 4 hours, and then raising the temperature from 465°C to 750°C with a heating rate of 1°C/min, maintaining at 750°C for 10 hours. The sintered material was naturally cooled to room temperature. The obtained material of Li_{1.04}Ni_{0.87}Co_{0.08}Mn_{0.05}O₂ was crushed into powder with an average particle size of 10∼15 µm.

100 parts of Li_{1.04}Ni_{0.87}Co_{0.08}Mn_{0.05}O₂ powder were added into the aqueous solution containing 21 parts of Co(NO₃)₂·6H₂O and 5 parts of LiNO₃, stirred for 30 min, and then the mixture was evaporated at 120°C to remove the water. The drying powder was put into a high-temperature furnace and sintered. The heating steps of sintering included: raising the temperature from room temperature to 600°C with a heating rate of 5°C/min, raising the temperature from 600 °C to 725°C with a heating rate of 1 °C/min, and maintaining at 725°C for 2 hours, and then cooling from 725°C to 550°C with a cooling rate of 1°C/min, then naturally cooled to room temperature. The products S-2 was crushed into powder with an average particle size of 10∼15 µm.

The X-ray powder diffraction measurement was performed using Co Kα ray. The I(003)/I(104) value of the material is 2.27 (Figure 4).

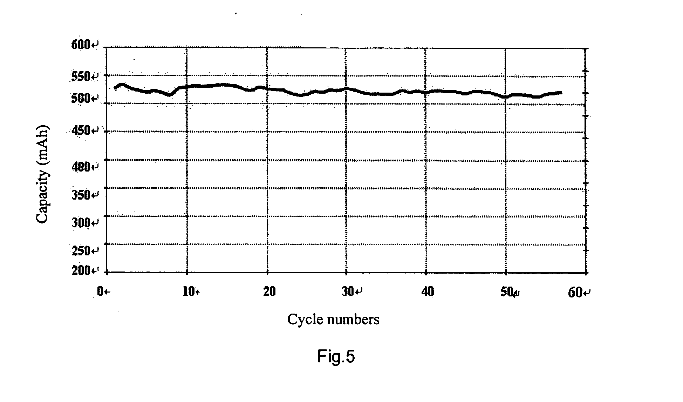

The testing battery is angle soft package battery, whose length×width×height = 48×26×5mm. 93.4 parts of S-2, 3 parts of acetylene black (Super P) and 3.6 parts of PVDF were mixed with 45 parts of NMP to prepare slurry, which was coated on an aluminum foil with thickness of 15µm. This produced a positive electrode whose diaphragm was polyethylene with a thickness of 20µm. The electrolyte was EC/DMC/EMC-LiPF₆ 1M, and the negative electrode was artificial graphite (MCMB). The battery was designed with a capacity of 550mAh. The charge and discharge performances of the battery were set at a current of 550mA, and when the voltage charge reached to 4.2V, a constant voltage charge at 4.2V was employed until terminate current 55A was reached. The discharging terminate voltage was 2.75V. The cycle curve is shown in Figure 5.

### Example 3

11.36 parts of mono-aquo LiOH, 1.99 parts of LiNO₃, 2.145 parts of Co(OH)₂ and 25 parts of spherical Ni_{0.97}Zn_{0.03}(OH)₂ were mixed, and then this mixture was put into a high-temperature furnace and sintered in air atmosphere. The heating steps of sintering included: raising the temperature from room temperature to 400°C with a heating rate of 5°C /min, raising the temperature from 400°C to 465°C with a heating rate of 1°C/min, and maintaining at 465°C for 4 hours, and then raising the temperature from 465°C to 750°C with a heating rate of 1°C/min, maintaining at 750°C for 10 hours. The sintered material was naturally cooled to room temperature. The obtained material Li_{1.04}Ni_{0.89}Zn_{0.03}Co_{0.05}O₂ was crushed into powder with an average particle size of 10∼15 µm.

100 parts of Li_{1.04}Ni_{0.89}Zn_{0.03}Co_{0.08}O₂ powder were added into the aqueous solution containing 0.33 parts of NH₄H₂PO₄, stirred for 30 min, and then the mixture was evaporated at 120°C to remove the water. The drying powder was put into a high-temperature furnace and sintered. The heating steps of sintering included raising the temperature from room temperature to 600°C with a heating rate of 5°C/min, raising the temperature from 600°C to 725°C with a heating rate of 1°C/min, and maintaining at 725 °C for 2 hours, and then cooling from 725°C to 550°C with a cooling rate of 1°C/min, then naturally cooled to room temperature. The products S-3 was crushed into powder with an average particle size of 10∼15 µm.

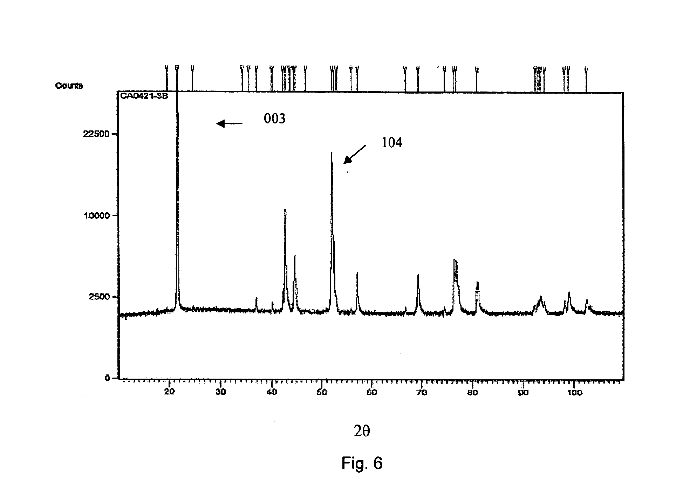

The X-ray powder diffraction measurement was performed using Co Kα ray. The I(003)/I(104) value of the material is 2.08 (figure 6).

### Example 4-6

Secondary batteries related to the present invention were fabricated with the positive electrode material prepared by example 1-3, the conventional negative electrode material and electrolyte. These secondary batteries are liquid, solid or polymer secondary lithium batteries or lithium ion batteries.

## Claims

1. A positive electrode material for secondary battery, **characterized in that:**
a. it contains a main component represented by the general formula of LiₓNi_{1-y-z}Co_{y}Me_{z}O_{2±n}; wherein 0.9≤x≤1.1, 0<y≤0.3, 0≤z≤0.1, 0≤n≤0.1; Me is any one or two selected from the group consisting of Mg, Zn, Mn, Co, A1 and Ca;
b. on the polycrystalline surface of the main component and/or among the crystal phase of the main component, a component represented by the formula of LiᵥNi₁₋ₐMe'ₐO_{2±m} is contained, wherein Me' is any one or two selected from the group consisting of Co, Mn, W, Mo, Cr, Ti, Fe and Mg, 0.5≤v≤1.5, 0.5≤a≤1.0, 0≤m≤0.1;
c. in the polycrystalline X-ray diffraction spectrum of the positive electrode material, the diffraction peak intensity ratio of (003) to (104) is 2.0≤I₍₀₀₃₎/I₍₁₀₄₎≤3.0.

2. The positive electrode material for secondary battery according to claim 1, **characterized in that** the molar ratio of the component which is contained on the polycrystalline surface of the main component and/or among the crystal phase of the main component to the main component is: 0.01≤ [LiᵥNi₁₋ₐMe'ₐO_{2±m}] /[LiₓNi_{1-y-z}Co_{y}Me_{z}O_{2±n}] ≤0.5 .

3. The positive electrode material for secondary battery according to claim 1 or 2, **characterized in that** the component of LiᵥNi₁₋ₐMe'ₐO_{2±m} is on the polycrystalline surface of the main component and/or among the crystal phase of the main component, wherein Me' is Co or Mn or their combination, 0.5≤v≤ 1.05, 0.5≤a≤1.0, 0≤m≤0.1.

4. The positive electrode material for secondary battery according to any one of claims 1-3, **characterized in that** the molar ratio of the component which is contained on the polycrystalline surface of the main component and among the crystal phase of the main component to the main component is: 0.03≤(LiᵥNi₁₋ₐMe'ₐO_{2±m}] / [LiₓNi_{1-y-z}Co_{y}Me_{z}O_{2±n}]≤0.1.

5. A method for preparation of the positive electrode material for secondary battery according to any one of claims 1∼4, **characterized in that:**
the first step: preparing the main component represented by the general formula of LiₓNi_{1-y-z}Co_{y}Me_{z}O_{2±n}, wherein 0.9≤x≤1.1, 0<y≤1.1, 0≤z≤0.1, 0≤n≤0.1, Me is any one or two selected from the group consisting of Mg, Zn, Mn, Co, Al and Ca;
the second step: forming the component of LiᵥNi₁₋ₐMe'ₐO_{2±m} on the polycrystalline surface of the main component and/or among the crystal phase of the main component, wherein Me' is any one or two selected from the group consisting of Co, Mn, W, Mo, Cr, Ti, Fe and Mg, 0.5≤ v≤1.5, 0.5≤a≤1.0, 0≤m≤0.1.

6. The method for preparation of the positive electrode material for secondary battery according to claim 5, **characterized in that:** the first step is:
a. the starting material is lithium, cobalt, nickel and the metal Me hydroxide; their mole fraction is: [Ni]=1-y-z, [Co]=y, [Me]=z, respectively; and the molar ratio of the lithium ions to metal ions (Ni+Co+Me) is 0.9≤[Li]/[Ni+Co+Me]≤1.2;
b. the raw materials mixed in the step a. are put into a high-temperature furnace and sintered through 2 stages; in the first stage, the system temperature is raised to 400∼500°C with a heating rate of 1∼10°C/min, and maintained for 2-8 hours; and then the system temperature is raised to 700∼800°C with a heating rate of 1∼10°C/min, then maintained for 5∼20 hours; the system is cooled after the end, and the material obtained by sintering is crushed; the sintering atmosphere is air.

7. The method for preparation of the positive electrode material for secondary battery according to claim 5, **characterized in that:** the second step is: the main component of LiₓNi_{1-y-z}Co_{y}Me_{z}O₂ prepared by the first step and the aqueous solution of Me'(NO₃)₂ and LiNO₃ are mixed according to the ratio; the molar ratio of the metal Me' ion to LiₓNi_{1-y-z}Co_{y}Me_{z}O₂ is: 0.01≤[Me']/[LiₓNi_{1-y-z}Co_{y}Me_{z}O₂]≤0.5, and the molar ratio of the lithium ions to the metal Me' ions in the said aqueous solution is 0.5 ≤ [Li]/[Me'] ≤.5; after drying and dewatering the suspension, the solid powder is obtained, which is put into a high-temperature furnace and sintered in air atmosphere; the sintering temperature is 500∼800°C, the sintering time is 1-8 hours; after sintering, it is naturally cooled to room temperature.

8. A secondary battery which contains the positive electrode material for secondary battery according to claim 1 or 2.

9. The secondary battery according to claim 8, **characterized in that** the secondary battery is liquid, solid or polymer secondary lithium battery or lithium ion battery.

10. The positive electrode material for secondary battery, **characterized in that:**
a. it contains a main component represented by the general formula of LiₓNi_{1-y-z}Co_{y}Me_{z}O_{2±n}; wherein 0.9≤x≤1.1, 0<y≤0.3, 0≤z≤0.1, 0≤n≤0.1, Me is any one or two selected from the group consisting of Mg, Zn, Mn, Co, A1 and Ca;
b. on the polycrystalline surface of the main component and/or among the crystal phase of the main component, a component of LiₓNi_{1-y}Me"_{y}PO₄ is contained, wherein Me" is Co or Fe, 1.0≤x≤1.5, 0≤y≤0.5;
c. in the polycrystalline X-ray diffraction spectrum of the positive electrode material, the diffraction peak intensity ratio of (003) to (104) is 2.0≤I₍₀₀₃₎/I₍₁₀₄₎≤3.0.

11. The positive electrode material for secondary battery according to claim 10, **characterized in that** the molar ratio of the component which is contained on the polycrystalline surface of the main component and/or among the crystal phase of the main component to the main component is: 0.001 ≤[LiₓNi_{1y}Me"_{y}PO₄] /[LiₓNi_{1-y-z}Co_{y}Me_{z}O_{2±n}] ≤0.05.

12. The positive electrode material for secondary battery according to claim 10, **characterized in that** the component of LiₓNi_{1-y}Me"_{y}PO₄ is contained on the polycrystalline surface of the main component and/or among the crystal phase of the main component, wherein 1.0≤x≤ 1.05, 0≤y≤0.15.

13. The positive electrode material for secondary battery according to claim 10, **characterized in that** the molar ratio of the component which is contained on the polycrystalline surface of the main component and/or among the crystal phase of the main component to the main component is: 0.001 ≤[LiₓNi_{1-y}Me"_{y}PO₄]/[LiₓNi_{1-y-z}Co_{y}Me_{z}O_{2±n}]≤0.01.

14. A method for preparation of the positive electrode material for secondary battery according to any one of claims 10∼13, **characterized in that:**
The first step: preparing the main component represented by the general formula of LiₓNi_{1-y-z}Co_{y}Me_{z}O_{2±n}, wherein 0.9≤x≤1.1, 0<y≤1.1, 0≤z≤0.1, 0≤n≤0.1, Me is any one or two selected from the group consisting of Mg, Zn, Mn, Co, Al and Ca;
The second step: forming the component of LiₓNi_{1-y}Me"_{y}PO₄ on the polycrystalline surface of the main component and/or among the crystal phase of the main component, wherein Me" is Co or Fe, 1.0≤x≤1.5, 0≤y≤0.5.

15. The method for preparation of the positive electrode material for secondary battery according to claim 14, **characterized in that** the first step is:
a. the starting material is lithium, cobalt, nickel and the metal Me hydroxide; their mole fraction is [Ni]=1-y-z, [Co]=y, [Me]=z, respectively; and the molar ratio of the lithium ions to metal ions (Ni+Co+Me) is 0.9≤ [Li]/[Ni+Co+Me]≤ 1.2;
b. the raw materials mixed in the step a. are put into a high-temperauture furnace and sintered through 2 stages; in the first stage, the system temperature is raised to 400∼500°C with a heating rate of 1∼10°C/min, and maintained for 2∼8 hours; and then the system temperature is raised to 700∼800°C with a heating rate of 1∼10°C/min, then maintained for 5∼20 hours; the system is cooled after the end, and the material obtained by sintering is crushed; the sintering atmosphere is air.

16. The method for preparation of the positive electrode material for secondary battery according to claim 14, **characterized in that** the second step is: the main component of LiₓNi_{1-y-z}Co_{y}Me_{z}O₂ prepared by the first step, the aqueous solution of Me"(NO₃)₂ and NH₄H₂PO₄ are mixed according to the ratio; the molar ratio of the PO₄³⁻ ions to LiₓNi_{1-y-z}Co_{y}Me_{z}O₂ is: 0.001≤[PO₄³⁻]/[LiₓNi_{1-y-z}Co_{y}Me_{z}O₂]≤0.05, and the molar ratio of the metal Me" ions to the PO₄3⁻ ion in the said aqueous solution is: 0.8 ≤ [Me"]/[PO₄³⁻]≤1.0; after drying and dewatering the suspension, the solid powder is obtained; this solid powder is put into a high-temperature furnace and sintered in air atmosphere; the sintering temperature is 500∼800°C, the sintering time is 1∼8 hours; after sintering, it is naturally cooled to room temperature.

17. A secondary battery which contains the positive electrode material for secondary battery according to claim 10 or 11.

18. The secondary battery according to claim 17, **characterized in that** the secondary battery is liquid, solid or polymer secondary lithium battery or lithium ion battery.
